# EUROPEAN PATENT APPLICATION

(11) **EP 2 365 618 A1**
(43) Date of publication of application: **14.09.2011**
(21) Application number: 10460009.3
(22) Date of filing: 08.03.2010
(51) Int. Cl.: H02M 1/00, H02H 7/00, H01G 2/00

(54) **Power supply unit for protective devices that reduces medium voltage**

(71) Applicant: ABB Research Ltd., 8050 Zürich (CH)
(72) Inventor: Szlosek, Marcin, 32-200 Miechów (PL); Kotylo, Karol, 20-863 Lublin (PL); Bywalec, Grzegorz, 32-602 Oswiecim (PL); Piasecki, Wojciech, 30-611 Krakow (PL)
(74) Representative: Chochorowska-Winiarska, Krystyna

(57) **Abstract**

The invention deals with an AC power supply unit that reduces voltage for electric power equipment applicable in power distribution systems. The inventive device comprises at least one capacitor (2) which is connected into a transmission line (7) and which is connected in series with the grounded primary winding (5) of a transformer (3) whose secondary winding (6) is connected with the terminals of a protective device (8) connected into the receiver circuit (9) of the power system.

## Description

The invention deals with an alternating current power supply unit that reduces voltage for electric power equipment, applicable in electric power distribution systems.

Transmission lines of electric power distribution systems are very often used for directly and/or indirectly supplying electric protective devices such as: failure indicators, cordless relays, electronic protective equipment, electronic control equipment, sectionalizers, reclosers. Such protective devices can be supplied with the electric voltage of the transmission line, converted from a higher level to a lower level which is acceptable for the electric protective equipment.

Most known solutions used to supply electric and/or electronic protective devices directly from the transmission line require the use of an additional power supply in case there is no passage of current in the transmission line. Such supply is implemented by means of a storage of electric energy, typically in the form of a storage battery.

The invention deals with such a power supply device which does not need additional supply if there is no passage of current in the transmission line and which allows to reduce voltage and enables operation of protective devices during a complete or partial current decay in the transmission line to which the protective device is directly and/or indirectly connected.

The essence of the AC power supply unit that reduces voltage for electric power equipment is that it contains at least one capacitor which is connected into the transmission line and which is connected in series to the grounded primary winding of a transformer whose secondary winding is connected to the terminals of a protective device connected into the receiver circuit.

Preferably the capacitor and the transformer are placed in one housing.

Preferably the capacitor and the transformer are sealed in the insulating material of the housing made as a full resin casting.

As an alternative, the capacitor and the transformer are placed inside an insulating envelope which is filled with an insulating medium.

As an alternative, the capacitor and the transformer are placed in separate modular insulating housings, the first one designed for placing the transformer in it and the second one designed for placing at least one capacitor in it.

Preferably the first modular insulating housing is made of resin in which the transformer is sealed.

Preferably the second modular insulating housings is made of resin in which at least one capacitor is sealed.

As an alternative, the power supply unit according to the invention is characterized by the fact that it contains at least two interconnected modular insulating envelopes, the first designed for placing the transformer in it, and the second modular envelope designed for placing at least one capacitor in it, the capacitors of the separate modules being electrically interconnected in series.

Preferably the transformer is placed inside the first modular envelope whose interior contains an insulating medium.

Preferably the capacitor is placed inside the second modular envelope whose interior contains an insulating medium.

The advantage of the inventive device is its simple design and compact construction, which offers possibilities of extending the device depending on current needs. In addition, the uncomplicated construction of the device guarantees a long-lasting and maintenance-free operation.

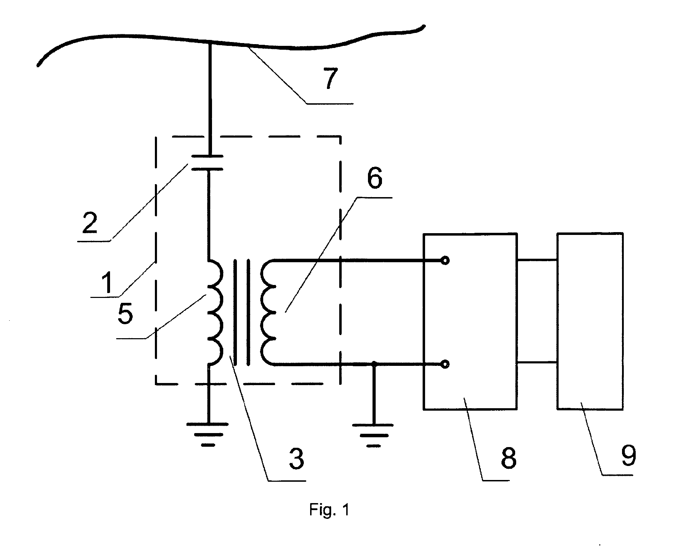

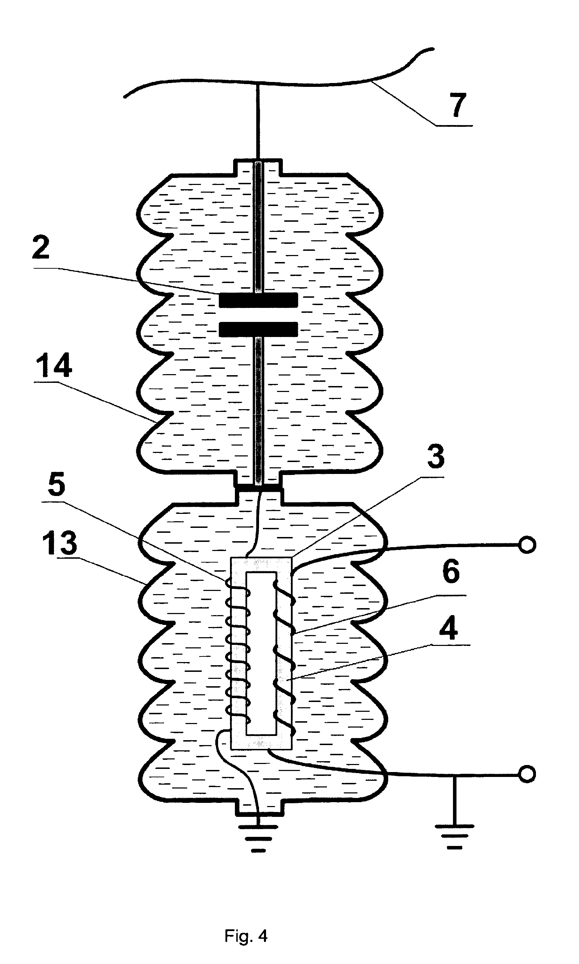

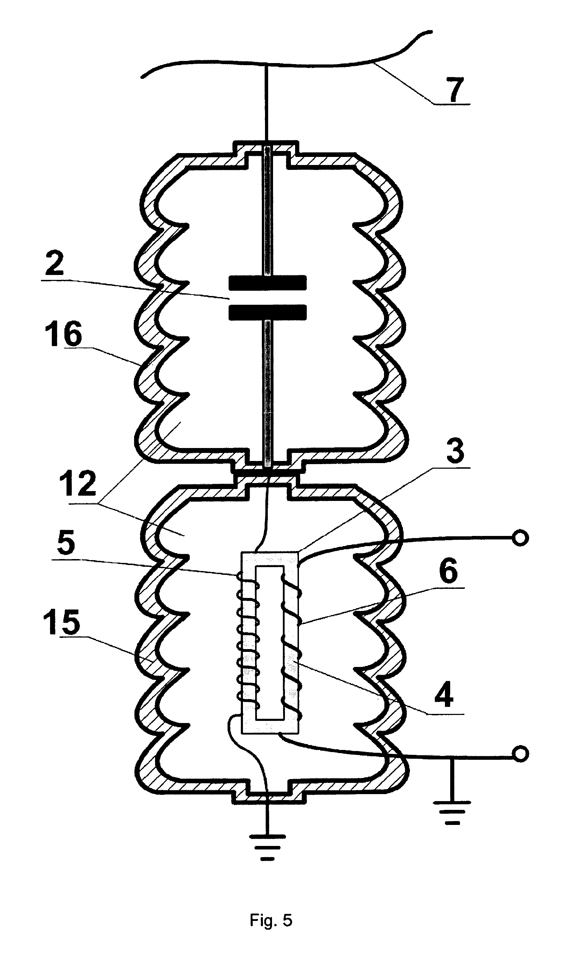

The inventive device is presented as an embodiment in the drawing where fig. 1 shows the schematic diagram of the device including the supply and receiver circuits, fig. 2 - the power supply unit as the first embodiment of the invention with one full casing, fig. 3 - the power supply unit as the second embodiment of the invention with one casing containing an insulating medium, fig. 4 ― the power supply unit as the third embodiment of the invention with a full modular casing, fig. 5 - the power supply unit as the fourth embodiment of the invention with one casing containing an insulating medium.

The power supply unit 1 is comprised of a capacitor 2 and a transformer 3 connected with each other in series. The transformer 3 contains a core 4 on which the primary winding 5 and the secondary winding 6 are wound. One terminal of the capacitor 2 is used for connection with the supply transmission line 7, and the other terminal is connected in series with the grounded primary winding 5 of the transformer 3 whose secondary winding 6 is connected with the terminals of the protective device 8 which is connected into the receiver circuit 9 of electric equipment. The secondary winding 6 is also grounded.

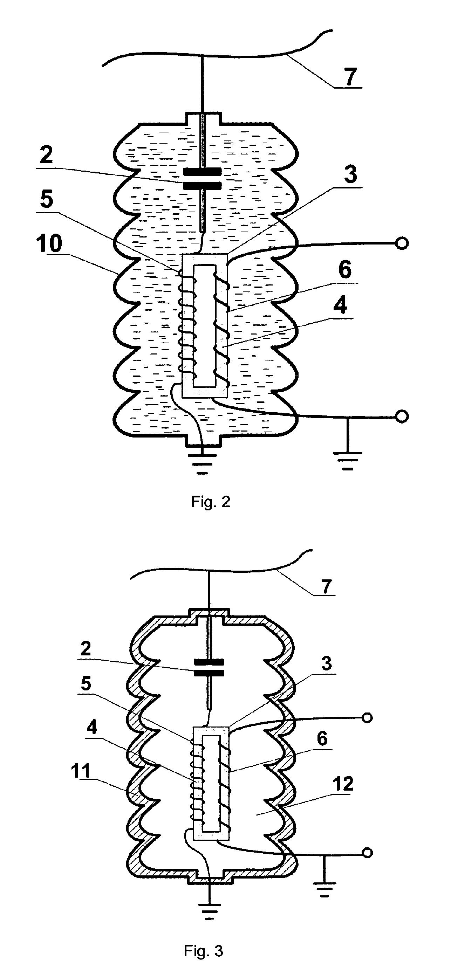

The power supply unit according to the first embodiment of the invention contains a capacitor 2 and a transformer 3 which are interconnected in series and are located in a common insulating envelope 10. The transformer 3 is fitted with a magnetic core 4 which secures magnetic coupling between the primary winding 5 and the secondary winding 6. The transformer 3 ensures the adjustment of the voltage on the terminals of the primary winding 5 to the voltage which occurs on the terminals of the secondary winding 6. An additional function performed by the transformer 3 is galvanic separation between the primary side 5 and the secondary side 6. In operating conditions, the capacitor 2 is connected directly with the transmission line 7 which is the supply line for the power supply unit 1, and with the primary winding 5 of the transformer 3, which winding is grounded. If more than one capacitor 2 is used, which is not shown in the drawing, these capacitors are connected in series forming a bank of capacitors. The output terminals of the secondary winding 6 of the transformer 3 are directly connected with the terminals of the protective device 8, not shown in fig. 2. The secondary winding 6 is additionally grounded. The AC voltage obtained on the output terminals of the secondary winding 6 is used directly to supply the protective device 8. The insulating housing 10 is an insulating resin casting in which there are sealed at least one capacitor 2 and a transformer 3 with its primary and secondary windings. The input terminal of the capacitor 2 is brought out of the casing 10. The output terminals of the secondary winding 6 are also brought out of the casing 10. The grounding terminal of the primary winding 5 is brought out of the casing 10. The secondary winding 6 is grounded outside the casing 10, but it also can be grounded in the casing 10, which is not shown in the drawing.

In the second embodiment of the invention, the insulating casing of the power supply unit 1 is made in the form of an insulating envelope 11 having walls thick enough to guarantee the durability of the power supply unit in adverse weather conditions and resistant to damage caused by birds or other wild animals if the power supply unit is located outdoors, for example, if the power supply unit is located on an electric pylon. The interior of the insulating envelope is filled with an insulating medium 12 which can be, for example, air or insulating gas such as sulfur hexafluoride.

In the operating conditions of the invention, in a case where the power supply unit 1 is used in medium voltage lines, capacitor 2 has its parameters designed so that the voltage between the connection point of the capacitor and the primary winding 5 of the transformer 2 on the one hand, and ground on the other is 1 kV. The role of the applied transformer 2 amounts to voltage reduction from 1 kV to 240V, and to ensuring galvanic separation between the medium voltage line and the low-voltage side of the supplied protective device 8. The voltage of the secondary winding of the transformer can be configured in any way, as an RMS value in the range from 40V to 400V, depending on the applied transformation ratio of the transformer.

In the third embodiment of the invention the insulating casing of the power supply unit consists of the first modular casing 13 containing a transformer 3 with the primary and secondary windings, and of at least one second casing 14 containing a capacitor 2. The modular casings 13 and 14 are all made as resin castings in whose interiors there are sealed the transformer 3 and at least one capacitor 2 respectively. If more than one capacitor 2 is used, which is not shown in the drawing, these capacitors are connected in series forming a bank of capacitors connected in series with the transformer 3. The modules 13 and 14 are connected with each other. The number of the modules 14 containing the capacitor 3 or a bank of capacitors depends on the electric parameters of the supply unit.

In the fourth embodiment of the invention the modular insulating casings are made in the form of insulating envelopes 15 and 16, where the envelope 15 is designed for placing the transformer 3 in it, and the envelope 16 - for placing in it at least one capacitor 2. The thickness of the walls 15 and 16 is selected to guarantee the durability of the power supply unit in adverse weather conditions and resistance to damage caused by birds or other wild animals if the power supply unit is located outdoors, for example, if the power supply unit is located on an electric pylon. The interior of the insulating envelopes 15 and/or 16 is filled with an insulating medium 12 which can be, for example, air or an insulating gas such as sulfur hexafluoride.

The power supply unit according to the invention can be also made as a combination of versions three and four, where the modular casing 13 for the transformer 3 can be connected with at least one modular casing 16, and also the modular casing 15 can be connected with at least one modular casing 14, which is not shown in the drawing. Moreover, the modular casings 14 for the capacitor 2 can be connected not only with each other but also with the casing or casings 14 forming a suitable set of capacitor housings, which is also not shown in the drawing.

## Claims

1. An alternating current power supply unit that reduces voltage for electric power equipment **characterized in that** it contains at least one capacitor (2) which is connected into a transmission line (7) and which is connected in series with the grounded primary winding (5) of the transformer (3) whose secondary winding (6) is connected with the terminals of a protective device (8) connected in the receiver circuit (9).

2. A power supply unit according to claim 1, **characterized in that** the capacitor (2) and the transformer (3) are located in a common insulating casing (10).

3. A power supply unit according to claim 2, **characterized in that** the capacitor (2) and the transformer (3) are sealed in the insulating material of the casing (10) made as a full resin casting.

4. A power supply unit according to claim 2, **characterized in that** the capacitor (2) and the transformer (3) are located inside an insulating envelope (11) whose interior contains an insulating medium (12).

5. A power supply unit according to claim 1, **characterized in that** the capacitor (2) and the transformer (3) are placed in separate modular casings, the first one (13) designed for placing the transformer (3) in it, and the second one (14) designed for placing at least one capacitor (1) in it.

6. A power supply unit according to claim 5, **characterized in that** the first modular insulating casing (13) is made of resin in which the transformer (3) is sealed.

7. A power supply unit according to claim 5, **characterized in that** the second modular insulating casing (14) is made of resin in which at least one capacitor (2) is sealed.

8. A power supply unit according to claim 1, **characterized in that** it contains at least two interconnected modular insulating envelopes, the first one (15) designed for placing the transformer (3) in it, and the second modular envelope (16) designed for placing at least one capacitor (2) in it, the capacitors of separate modules (16) being electrically interconnected in series.

9. A power supply unit according to claim 8, **characterized in that** the transformer (3) is located inside the first modular envelope (15) whose interior contains an insulating medium (12).

10. A power supply unit according to claim 8, **characterized in that** the capacitor (2) is located in the second modular envelope (16) whose interior contains an insulating medium (12).
